# EUROPEAN PATENT SPECIFICATION

(11) **EP 1 684 397 B1**
(45) Date of publication and mention of the grant of the patent: **05.10.2011**
(21) Application number: 06000508.9
(22) Date of filing: 11.01.2006
(51) Int. Cl.: H02J 7/00

(54) **Portable compound battery unit management system**
Verwaltungssystem für tragbare Verbindungsbatterie-Einheit
Système de management pour unité portable de batterie composée

(30) Priority: 21.01.2005 CN 200510007138
(43) Date of publication of application: 26.07.2006
(73) Proprietor: Wiz Energy Technology Co., Ltd., Jhongshan Taipei City (TW)
(72) Inventor: Shu, Ying-Hao, Nagnang District Taipei City (TW); Ma, Bin-Yen, Beitou District Taipei City (TW)
(74) Representative: Vaughan, Christopher Tammo

(56) References cited:
- EP-A1- 1 215 111
- WO-A-02/081255
- US-A1- 2004 222 771

## Description

### Field of the invention

The present invention relates to a portable compound battery unit management system, and in particular, to a portable compound battery unit management system which can be loaded on any motor drive vehicle so as to supply and supplement sufficient mechanical power for the vehicle to travel desired distance by well co-operative function between a portable high capacity battery unit and a main power supply battery unit contained in the system with a reliably low operation cost.

### Description of the prior art

In recent years, stimulated by the environment consciousness the less pollutant, medium or short distance private transportation tool becomes indispensable for the future urban development. Meanwhile, the progress of novel battery technology, electrical power control technique and its devices provides the lightweight motor-driven vehicle with a hope of brilliant future.

In the prior battery technology, the study is focused on how to improve the output performance of the high capacity battery unit and the high power supply battery unit to obtain an ideal compound battery system (see Taiwan Pat. Publication No. 494071, July 11, 2002) or, on the other hand, by utilizing a possibly essential future power source, a fuel cell, together with a high power battery unit to ensure the fuel cell to serve for a long duration of system operation in better efficiency. With this scheme, the necessary secondary battery also provides the required control power for the running of the fuel cell (See Taiwan Pat. Publication No. 559602, Nov.1, 2003). In the above-mentioned cases, the real user's needs and the questionable problems are seldom encountered with the promoting market of motor-driven vehicles. One of the problems is that most of districts where urgently demanding for using the motor-driven vehicles are the downtowns so congested in population and buildings resulting in difficult to find suitable place for allowing exhausted battery unit to make long time recharging. In most densely populated cites, the average travelling distance for a person per day is 20 to 30 km. Accordingly, a battery unit allowable for the vehicle to go more than 60km per day is an excessively luxurious facility when considering its recharge and maintenance. Moreover, the trend of design of a conventional battery system has too indulged in exhibiting electronic control technology and control system for compound output. Consequently, it only obtains a high intelligent performance of battery protection and mechanical power, but instead, a high cost incurred by losing efficiency in numerous times of energy conversion and electronic control, which means in such a complicated system has been neglected that leads to an obstruction to promoting a market for motor drive vehicles.

The inventor has dedicated great efforts for years to studying and improving these shortcomings inherent to the prior art and come up finally with a novel portable compound battery unit management system as provided in this invention to eliminated the shortcomings mentioned above.

WO02/081255A1 discloses an electrical energy storage device for storing electrical energy and supplying the electrical energy to a driving motor at different power levels is disclosed. The electrical storage device has an energy battery connected to a power battery. The energy battery has a higher energy density than the power battery. However, the power battery can provide electrical power to the electrical motor at different power rates, thereby ensuring that the motor has sufficient power and current when needed. The power battery is continuously recharged by the energy storage battery. In this way, the power battery temporarily stores electrical energy received from the energy battery and provides the electrical energy at the different power rates as required by the motor. The energy storage device can be releasably connected to an external power source in order to recharge both batteries.; Both batteries can be recharged independently to optimize the recharging and lifetime characteristics of the batteries.

### Summary of the invention

A first aspect of the present invention provides
a portable compound battery unit management system (100) characterised in that the battery unit management system comprises:
a DC converter (3) coupled to a motor controller (5), the motor controller (5) being configured for coupling to a motor;
a main power battery unit (2), coupled to the DC converter (3), configured for supplying power to drive the motor controller (5), and provided with a first battery management means (21) configured to control a maximum output current; and
a portable high capacity battery unit (1) with a second, built-in battery management means (11) and being configured for coupling to the DC converter (3); wherein:
   the DC converter (3) is configured to boost up or buck down an input voltage depending on a difference between rated voltages of the main power battery unit (2) and the portable high capacity battery unit (1), and is selectively operable:
      i) to provide an output voltage to charge the main power battery unit (2) from the portable high capacity battery unit (1); and
      ii) to convert an output power of the portable high capacity battery unit (1) to a power required to operate the motor controller (5) and motor;
and further wherein:
   the portable high capacity battery unit (1) is detachable from the system (100) and independently chargeable from an external charger (4).

A second aspect of the present invention provides
a motor drive vehicle comprising a portable compound battery unit management system (100), the battery unit management system comprising:
a DC converter (3) coupled to a motor controller (5), the motor controller (5) being configured for coupling to a motor;
a main power battery unit (2), coupled to the DC converter (3), configured for supplying power to drive the motor controller (5), and provided with a first battery management means (21) configured to control a maximum output current; and
a portable high capacity battery unit (1) with a second, built-in battery management means (11) and being configured for coupling to the DC converter (3); wherein:
   the DC converter (3) is configured to boost up or buck down an input voltage depending on a difference between rated voltages of the main power battery unit (2) and the portable high capacity battery unit (1), and is selectively operable:
      i) to provide an output voltage to charge the main power battery unit (2) from the portable high capacity battery unit (1); and
      ii) to convert an output power of the portable high capacity battery unit (1) to a power required to operate the motor controller (5) and motor;
and further wherein:
   the portable high capacity battery unit (1) is detachable from the system (100) and independently chargeable from an external charger (4), wherein
   the main power battery unit (2) is entrained on the motor drive vehicle, and
   portable high capacity battery unit (1) is detachable from the motor drive vehicle.

The first battery management means (21) may be further configured to provide the DC converter (3) and the motor controller (5) coupled thereto with battery information required for operation.

The portable high capacity battery unit (1) may be a high capacity Li ion battery, a Li Polymer battery, or an exchange type fuel cell.

The battery unit management system (100) may comprise a plurality of interchangeable portable high capacity battery units (1).

The second, built-in battery management means (11) may be configured to provide low capacity indication or low capacity cut-off between the portable high capacity battery unit (1) and the DC converter (3).

The portable high capacity battery unit (1) may be rechargeable from an external battery charger (4) when coupled to the DC controller (3), with the main power battery unit (2) being rechargeable through the DC converter (3).

The main power battery unit (2) may be a Pb/CaS04 battery, a Ni-MH battery, a Ni-Zn battery, a Li-Mn/Li-Co battery, or a Li-Polymer battery.

The DC converter (3) may be a maximum current limiting battery charger configured to output electric power to a moving vehicle, to share the power demand of the motor controller (5) between the main power battery unit (2) and the portable high capacity battery unit (1), and the DC converter (3) is also configured to recharge the main power battery unit (2) from the portable high capacity battery unit (1).

In the event that the energy required for travelling a required distance in one trip is beyond the capacity of the portable high capacity battery unit (1), the portable high capacity battery unit (1) may be recharged with the external battery charger (4), or replaced by another portable high capacity battery unit (1), or the entire compound battery system may be recharged with the external battery charger (4) thereby restoring the power of the main power battery unit (2).

The battery unit management system (100) may further comprise logic circuitry to judge whether the electric energy stored in the two battery units (1, 2) is enough to operate the motor controller (5).

The DC converter (3) may include control functions of checking: whether a residual charge of the portable high capacity battery unit (1) is zero, whether the main power battery unit (2) is fully charged, and whether the motor controller (5) is in working state.

The main power battery unit (2) may comprise a plurality of component batteries connected in series, the component batteries being the same or different.

The battery unit management system (100) may comprise more than one portable high capacity battery unit (1).

The main power battery unit (2) may be configured to be entrained on a motor drive vehicle, and the portable high capacity battery unit (1) may be configured to be detachable from the motor drive vehicle.

In keeping pace with the progress of electronic technology, the aims how to prolong the battery lifespan and smoothly output its electrical power have been overcome. However, it is remained as the most important unsolved problem how to supplement the electrical power for a motor-driven vehicle to fit for the user's habit. In recent years, the study puts its basis on how to improve the battery system, and actually a lot of novel and tangible ideas have been suggested, but most of the suggestions are limited in the scope of how to realize the longest travelling distance within an allowable weight and price. But it remains still unsolved as how to obtain energy supply easily from an existing energy supply network so as to lowering the overall electronic control cost in a battery unit effectively.

The kernel of the portable compound battery unit management system according to the present invention lies in that how to provide a simple battery system that can fulfil the need for a vehicle to travel more than 60km per day which being longer than 30km per day for most of the fuel drive vehicles by providing means for rapid recharging. To achieve this object, the present invention provides a main power battery unit entrained on the motor drive vehicle, and a DC converter (from now on, call it a converter) capable of predicating the time to start by a simple logic judgment. With this scheme in the battery unit along with an extra electrical power supply means that the expectation of most of the users to perform possible maximum travelling distance per day by supplementing electrical energy in a handy way can be fulfilled.

### Brief description of the drawings

Fig. 1 is a schematic view of the present invention;
Fig, 2 is a schematic view of the main power battery unit of the present invention.
Fig. 3 is a schematic view of the DC converter of the present invention;
Fig. 4 is an illustrative flow chart of energy conversion control; and
Fig. 5 is a schematic view of an embodiment of the present invention.

### Detailed description of an embodiment of the present invention

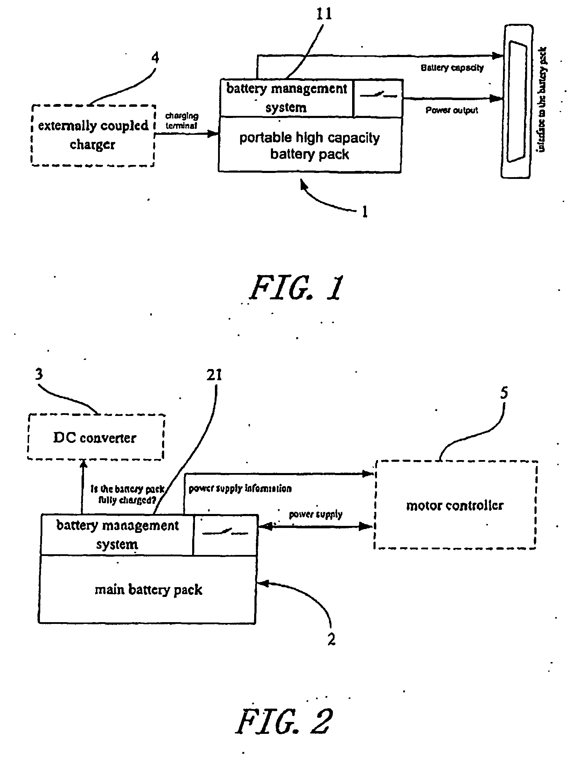

Referring to Fig.1, in this schematic view of the present invention, the portable compound battery unit management system contains a portable high capacity battery unit 1 essentially for supplying a motor drive vehicle with daily requirement of energy consumption for travelling predetermined distance in high energy-weight ratio and reasonable weight and volume. The applicable batteries include high power Lithium ion and Lithium polymer batteries. In the future, and exchange type fuel cell used in the notebook computer might be one of the selection owing to its merits in compactness and low cost. The portable high power battery unit 1, which is not limited to one unit only in application, can be recharged with an externally adapted battery charger 4. For this reason, the battery unit 1 must be accompanied by a built in battery unit management means 11 with respect to the types of installed battery unit so as to ensure its stability and security in case it is separated from the vehicle. Such an independently operable case battery unit management means 11 can liberate difficulty of overall system management and lower the overall cost for electronic control and improve the stability of the overall system. Besides, the battery unit management means 11 is functional for low capacity indication and low capacity cut-off so as to facilitate means for controlling a DC converter installed at its rear side.

Referring to Fig. 2, a main power battery unit 2 is a high power battery unit capable of supplying electrical power to a motor controller 5 for either instantaneously or a long duration of time. The applicable batteries for this battery unit are those ordinary batteries such as Pb./CaSO₄ battery, Ni-mH battery, Ni-Zn battery, Li-Mn/Li-Co Battery, and Li-Polymer battery. Being an essential power source for the motor, the component batteries used in the main power battery unit 2 are connected in series. The battery unit 2 must contain a battery management means 21 or a device for control maximum output current so as to insure the security and stability of the battery unit 2 during operation and prolong the lifespan of the battery unit 2 as well. Moreover, the battery management means 21 serves to provide the converter 3 and the motor controller 5 installed at the rear side with necessary information for operation.

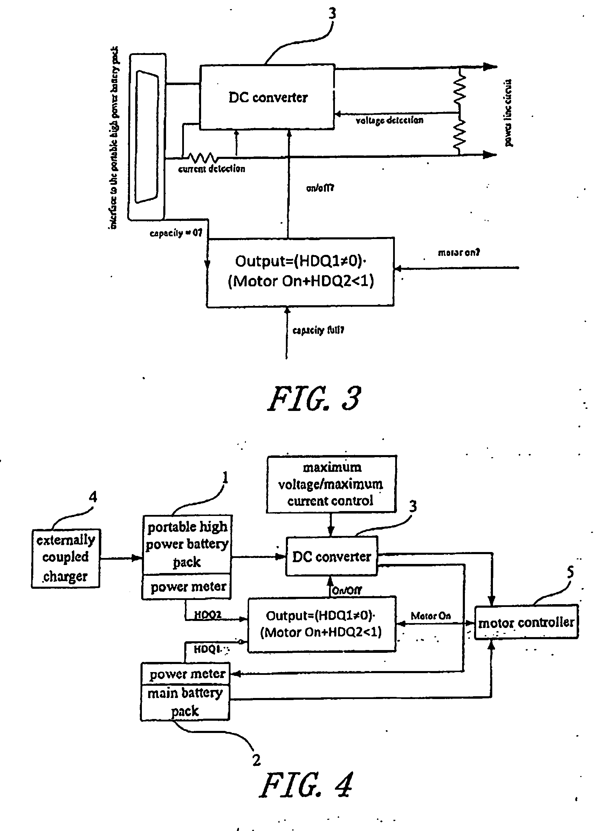

Referring to Fig. 3 and Fig.4, which are respectively a schematic view of the converter and an illustrative flow chart of energy conversion control according to the present invention. As shown in Fig. 3, the converter 3 is a simple battery charger usable to transfer the electrical energy from the portable high capacity battery unit 1 to the main power battery unit 2 either by boosting up or bucking down the voltage depending on the difference of rated voltages between the portable high capacity battery unit 1 and the main power battery unit 2. The way of control is based on the formula Output=(HDQ1≠0)·(Motor On +HDQ2<1) in which only three conditions are taken into account, i.e. whether the residual charge of the battery unit 1 is zero, whether the battery unit 2 is fully charged, and whether the motor controller 5 is in working state. In all, the mission of the converter 3 is transforming the electric output of the battery unit 1 to the electrical power of the battery unit 2, or transforming the electric output of the battery unit 1 to the working power of the motor controller 5. Since the conventional converter 3 is easy to achieve the object to output maximum current and maximum voltage, the demand of charging and discharging the battery units stably with high efficiency can be easily fulfilled. As the converter 3 is also a battery charger capable of limiting maximum current, it can output power to the moving vehicle so as to assist the main power battery unit 2 by sharing part of power demand for the motor controller 5 and supplement the power to the main power battery unit 2. In case the travelling distance exceeds 30km, which being beyond the ability of the battery unit 1 to carry out, it can be recharged again with the external battery charger 4 for supplement of energy, or prepare two portable high capacity battery units 1, or recharge the entire compound battery system directly thereby completely restoring the power of the main power battery unit 2.

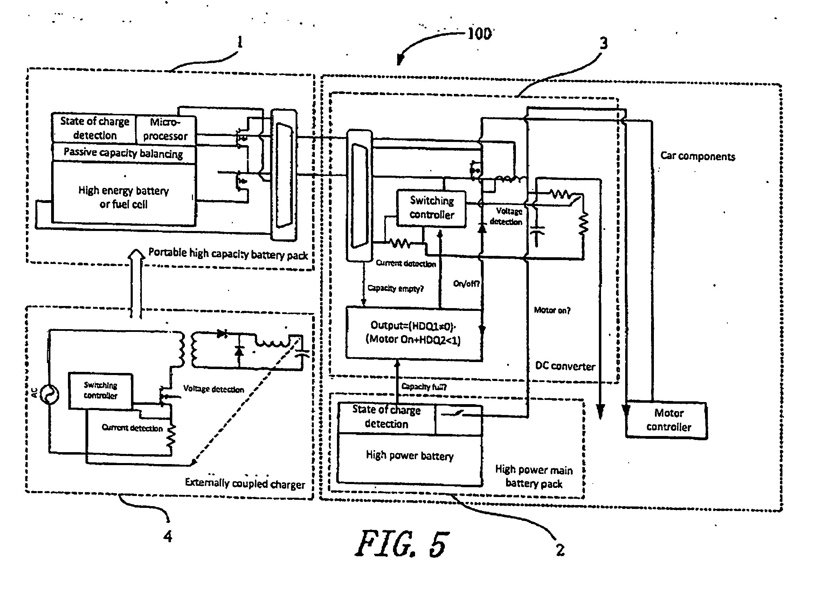

An embodiment of the present invention is shown in Fig. 5, the portable compound battery management system 100 is designed basically as a battery unit for a light type motor-driven bicycle. The performance data are as follows: load: 70kg, total weight of the vehicle: 130kg, maximum travelling distance: 70km, travelling distance for fully charged portable high capacity battery unit 1: 35km, average vehicle speed: 30km/hr. Under this situation, a 36v/17Ah/20kg Pb-acid battery unit with a charge indicator is selected relevant to serve as the main power battery unit 2. The selective portable high capacity battery unit 1 is a 12 series/10Ah/5kg Lithium-Polymer battery unit accompanied with functions of individual battery voltage control, passive battery capacity balancing, working temperature protection, and battery capacity indication so as to form a battery management means. The converter 3 is rated at 5A constant current, 43.5v buck down converter together with a control circuit to work at a predetermined condition. The portable high capacity battery unit 1 having 450Wh total power with available power of 430W after stepping down by the converter 3 can provide the light type motor drive auto bicycle to travel 1.2hr and above at a speed of 30km/hr. With this performance, the user can constantly maintain the two battery units 1 and 2 at a fully charged state by means of the office or the domestic outlet as a charging source. The overall compound battery management system 100 is able to provide electric energy of 1000Wh for the motor bicycle to run above 3 hours at 30km/h, reaching 90km distance. After that the portable high capacity battery unit 1 may be set in the compound battery management system 100 so as to recharge the overall battery units 1, 2 at the same time, or may select to recharge the portable high capacity battery unit 1 several times alone so as to keep its maximum continuous power output at 1.0kW. With this scheme, the compound battery management system can satisfy the demand of the user with low operation cost by effective cooperative action between a high capacity battery unit and a high power output battery unit. This is the kernel of the present invention. The battery management means built in the portable high capacity battery unit 1 and the low cost external battery charger 4 usable for charging the Lithium battery with constant current and voltage are already sufficient for maintaining the performance of the high capacity battery unit 1. The motor controller 5 installed at the rear terminal of this system is able to work stably only if it can be fulfilled the requirement of maximum continuous input current at minimum 30V working voltage. The electronic circuit, which is the heart of the system, is but a buck down converter capable of outputting maximum voltage and current. In case the control chip of the circuit has a function to standby at low current, and a simple logic to judge whether the electric power of the two battery units is enough to operate the motor controller (does the vehicle can start?), the both battery unit management means are sure to operate the both battery units stably. If the portable compound battery unit management system of this invention is compared with the above two cited inventions and other prior arts, it has several noteworthy advantages, namely:
1.The effectively combined battery with the portable high capacity battery unit and the main power battery unit is very convenient to supply the power for driving the motor vehicle to travel desired distance with a low operation and maintenance cost.
2. The system is applicable to any type of motor-driven vehicle. The portable high capacity battery unit is light weighted so that they can be detached from the vehicle for recharge even up to high-rise buildings.
3.The portable high capacity battery unit has a high energy-weight ratio so that it can supply the vehicle a sufficient power for everyday running. A compact and inexpensive exchange type fuel cell used in a notebook computer is also applicable other than those batteries described above.

While the invention has been described in terms of what are presently considered to be the most practical and preferred embodiment, it is to be understood that the invention need not be limited to the disclosed embodiment.

Incidentally, the present invention is a high level technical creation and by no means, simply utilizing conventional technology or knowledge known prior to the application for patent or can easily made by persons skilled in the arts prior to the application for patent, the invention has neither been published or put to public use, nor displayed in an exhibition. Therefore, we think, the present invention is entitled for patent.

## Claims

1. A portable compound battery unit management system (100) comprising:
a DC converter (3) coupled to a motor controller (5), the motor controller (5) being configured for coupling to a motor;
a main power battery unit (2), coupled to the DC converter (3), configured for supplying power to drive the motor controller (5), and provided with a first battery management means (21) configured to control a maximum output current; and
a portable high capacity battery unit (1) with a second, built-in battery management means (11) and being configured for coupling to the DC converter (3); wherein:
the DC converter (3) is configured to boost up or buck down an input voltage depending on a difference between rated voltages of the main power battery unit (2) and the portable high capacity battery unit (1), and is selectively operable:
i) to provide an output voltage to charge the main power battery unit (2) from the portable high capacity battery unit (1); and
ii) to convert an output power of the portable high capacity battery unit (1) to a power required to operate the motor controller (5);
and **characterized in that**
the portable high capacity battery unit (1) is detachable from the system (100) and independently chargeable from an external charger (4).

2. The battery unit management system (100) of claim 1, wherein the first battery management means (21) is further configured to provide the DC converter (3) and the motor controller (5) coupled thereto with battery information required for operation.

3. The battery unit management system (100) of claim 1 or 2, wherein the portable high capacity battery unit (1) is a high capacity Li ion battery, a Li Polymer battery, or an exchange type fuel cell.

4. The battery unit management system (100) of any preceding claim, comprising a plurality of interchangeable portable high capacity battery units (1).

5. The battery unit management system (100) of any preceding claim, wherein the second, built-in battery management means (11) is configured to provide low capacity indication or low capacity cut-off between the portable high capacity battery unit (1) and the DC converter (3).

6. The battery unit management system (100) of any preceding claim, wherein the portable high capacity battery unit (1) is rechargeable from an external battery charger (4) when coupled to the DC converter (3), with the main power battery unit (2) being rechargeable through the DC converter (3).

7. The battery unit management system (100) of any preceding claim, wherein the main power battery unit (2) is a Pb/CaSO4 battery, a Ni-MH battery, a Ni-Zn battery, a Li-Mn/Li-Co battery, or a Li-Polymer battery.

8. The battery unit management system (100) of any preceding claim, wherein the DC converter (3) is a maximum current limiting battery charger configured to output electric power to a moving vehicle, operable to share the power demand of the motor controller (5) between the main power battery unit (2) and the portable high capacity battery unit (1), and the DC converter (3) is also configured to recharge the main power battery unit (2) from the portable high capacity battery unit (1).

9. The battery unit management system (100) of claim 8, wherein, in the event that the energy required for travelling a required distance in one trip is beyond the capacity of the portable high capacity battery unit (1), the portable high capacity battery unit (1) can be recharged with the external battery charger (4), or replaced by another portable high capacity battery unit (1), or the entire compound battery system can be recharged with the external battery charger (4) thereby restoring the power of the main power battery unit (2).

10. The battery unit management system (100) of any preceding claim, further comprising logic circuitry to judge whether the electric energy stored in the two battery units (1, 2) is enough to operate the motor controller (5).

11. The battery unit management system (100) of any preceding claim, wherein the DC converter (3) includes control functions of checking: whether a residual charge of the portable high capacity battery unit (1) is zero, whether the main power battery unit (2) is fully charged, and whether the motor controller (5) is in working state.

12. The battery unit management system (100) of any preceding claim, wherein the main power battery unit (2) comprises a plurality of component batteries connected in series, the component batteries being the same or different.

13. The battery unit management system (100) of any preceding claim, comprising more than one portable high capacity battery unit (1).

14. The battery unit management system (100) of any preceding claim, wherein the main power battery unit (2) is configured to be entrained on a motor drive vehicle, and
the portable high capacity battery unit (1) is configured to be detachable from the motor drive vehicle.

15. A motor drive vehicle comprising a portable compound battery unit management system (100) according to claim 14, wherein
the main power battery unit (2) is entrained on the motor drive vehicle, and
portable high capacity battery unit (1) is detachable from the motor drive vehicle.

## Patentansprüche

1. Portables Verbundbatterieeinheit-Managementsystem (100), das folgendes umfasst:
einen Gleichstromwandler (3), der mit einer Motorsteuereinheit (5) gekoppelt ist, wobei die Motorsteuereinheit (5) zur Kopplung mit einem Motor konfiguriert ist;
eine Hauptversorgungsbatterieeinheit (2), die mit dem Gleichstromwandler (3) gekoppelt und so konfiguriert ist, dass sie Strom für den Antrieb der Motorsteuereinheit (5) vorsieht, und wobei sie mit einer ersten Batteriemanagementeinrichtung (21) vorgesehen ist, die so konfiguriert ist, dass sie einen maximalen Ausgangsstrom steuert; und
eine portable Hochleistungsbatterieeinheit (1) mit einer zweiten, integrierten Batteriemanagementeinrichtung (11) und mit einer Konfiguration zur Kopplung mit dem Gleichstromwandler (3); wobei:
der Gleichstromwandler (3) so konfiguriert ist, dass er eine Eingangsspannung abhängig von einer Differenz zwischen Nennspannungen der Hauptversorgungsbatterieeinheit (2) und der portablen Hochleistungsbatterieeinheit (1) verstärkt oder abwärtswandelt, und wobei der Wandler selektiv so betrieben werden kann, dass:
i) er eine Ausgangsspannung zum Laden der Hauptversorgungsbatterieeinheit (2) über die portable Hochleistungsbatterieeinheit (1) lädt; und
ii) er eine Ausgangsleistung der portablen Hochleistungsbatterieeinheit (1) auf eine Leistung wandelt, die erforderlich ist, um die Motorsteuereinheit (5) zu betreiben;
und **dadurch gekennzeichnet, dass** die portable Hochleistungsbatterieeinheit (1) von dem System (100) getrennt und unabhängig über eine externe Ladeeinrichtung (4) geladen werden kann.

2. Batterieeinheit-Managementsystem (100) nach Anspruch 1, wobei die erste Batteriemanagementeinrichtung (21) ferner so konfiguriert ist, dass sie an den Gleichstromwandler (3) und die damit gekoppelte Motorsteuereinheit (5) für den Betrieb erforderliche Batterieinformationen bereitstellt.

3. Batterieeinheit-Managementsystem (100) nach Anspruch 1 oder 2, wobei es sich bei der portablen Hochleistungsbatterieeinheit (1) um eine Li-Ionen-Batterie, eine Li-Polymer-Batterie oder eine Wechselbrennstoffzelle handelt.

4. Batterieeinheit-Managementsystem (100) nach einem der vorstehenden Ansprüche, wobei das System eine Mehrzahl austauschbarer portabler Hochleistungsbatterieeinheiten (1) umfasst.

5. Batterieeinheit-Managementsystem (100) nach einem der vorstehenden Ansprüche, wobei die zweite, integrierte Batteriemanagementeinrichtung (11) so konfiguriert ist, dass sie eine Anzeige für eine geringe Kapazität oder eine Niederkapazitätsabschaltung zwischen der portablen Hochleistungsbatterieeinheit (1) und dem Gleichstromwandler (3) bereitstellt.

6. Batterieeinheit-Managementsystem (100) nach einem der vorstehenden Ansprüche, wobei die portable Hochleistungsbatterieeinheit (1) über eine externe Batterieladeeinrichtung (4) wieder aufgeladen werden kann, wenn sie mit der Gleichstromwandler (3) gekoppelt ist, wobei die Hauptversorgungsbatterieeinheit (2) über den Gleichstromwandler (3) aufgeladen werden kann.

7. Batterieeinheit-Managementsystem (100) nach einem der vorstehenden Ansprüche, wobei es sich bei der Hauptversorgungsbatterieeinheit (2) um eine Pb/CaSO4-Batterie, eine Ni-MH-Batterie, eine Ni-Zn-Batterie, eine Li-Mn/Li-Co-Batterie oder eine Li-Polymer-Batterie handelt.

8. Batterieeinheit-Managementsystem (100) nach einem der vorstehenden Ansprüche, wobei es sich bei dem Gleichstromwandler (3) um einer Batterieladeeinrichtung zur Begrenzung des Maximalstroms handelt, die so konfiguriert ist, dass elektrischer Strom an sich bewegendes Fahrzeug ausgegeben wird, mit einer Funktionsfähigkeit zum Verteilen des Leistungsbedarfs der Motorsteuereinheit (5) zwischen der Hauptversorgungsbatterieeinheit (2) und der portablen Hochleistungsbatterieeinheit (2), und wobei der Gleichstromwandler (3) ferner so konfiguriert ist, dass er die Hauptleistungsbatterieeinheit (2) über die portable Hochleistungsbatterieeinheit (1) wieder auflädt.

9. Batterieeinheit-Managementsystem (100) nach Anspruch 8, wobei für den Fall, dass die für das Zurücklegen einer erforderlichen Wegstrecke in einem Trip erforderliche Energie die Kapazität der portablen Hochleistungsbatterieeinheit (1) übersteigt, die portable Hochleistungsbatterieeinheit (1) durch die externe Batterieladeeinrichtung (4) wieder aufgeladen werden kann, oder durch eine andere portable Hochleistungsbatterieeinheit (1) ersetzt werden kann, oder wobei das gesamte Verbundbatteriesystem über die externe Batterieladeeinrichtung (4) wieder aufgeladen werden kann, wodurch die Leistung der Hauptversorgungsbatterieeinheit (2) wiederhergestellt werden kann.

10. Batterieeinheit-Managementsystem (100) nach einem der vorstehenden Ansprüche, wobei das System ferner eine Logikschaltkreisanordnung umfasst, um zu bestimmen, ob die in den beiden Batterieeinheiten (1, 2) gespeicherte elektrische Energie ausreicht, um die Motorsteuereinrichtung (5) zu betreiben.

11. Batterieeinheit-Managementsystem (100) nach einem der vorstehenden Ansprüche, wobei der Gleichstromwandler (3) Steuerfunktionen aufweist zum Prüfen: ob eine Restladung der portablen Hochleistungsbatterieeinheit (1) gleich Null ist, ob die Hauptleistungsbatterieeinheit (2) vollständig geladen ist und ob sich die Motorsteuereinrichtung (5) in einem Betriebszustand befindet.

12. Batterieeinheit-Managementsystem (100) nach einem der vorstehenden Ansprüche, wobei die Hauptleistungsbatterieeinheit (2) eine Mehrzahl von Komponentenbatterien umfasst, die in Reihe miteinander verbunden sind, wobei die Komponentenbatterien identisch oder unterschiedlich sind.

13. Batterieeinheit-Managementsystem (100) nach einem der vorstehenden Ansprüche, wobei das System mehr als eine portable Hochleistungsbatterieeinheit (1) umfasst.

14. Batterieeinheit-Managementsystem (100) nach einem der vorstehenden Ansprüche, wobei die Hauptleistungsbatterieeinheit (2) so konfiguriert ist, dass sie an einem Fahrzeug mit Motorantrieb mitgeführt werden kann, und wobei die portable Hochleistungsbatterieeinheit (1) so konfiguriert ist, dass sie von dem Fahrzeug mit Motorantrieb getrennt werden kann.

15. Fahrzeug mit Motorantrieb, das ein portables Verbundbatterieeinheit-Managementsystem (100) nach Anspruch 14 umfasst, wobei die Hauptleistungsbatterieeinheit (2) an dem Fahrzeug mit Motorantrieb mitgeführt wird, und wobei
die portable Hochleistungsbatterieeinheit (1) von dem Fahrzeug mit Motorantrieb getrennt werden kann.

## Revendications

1. Système de gestion pour unité portable de batterie composée (100) comprenant :
un convertisseur CC (3) couplé à un contrôleur de moteur (5), le contrôleur de moteur (5) étant configuré pour un accouplement à un moteur ;
une unité de batterie d'alimentation principale (2), couplée au convertisseur CC (3), configurée pour fournir l'alimentation pour entraîner le contrôleur de moteur (5), et pourvue de premiers moyens de gestion de batterie (21) configurés pour contrôler un courant maximal de sortie ; et
une unité portable de batterie haute capacité (1) avec des seconds moyens de gestion de batterie intégrés (11) et configurée pour un accouplement au convertisseur CC (3) ; dans lequel :
le convertisseur CC (3) est configuré pour augmenter ou réduire une tension d'entrée en fonction d'une différence entre les tensions nominales de l'unité de batterie d'alimentation principale (2) et de l'unité portable de batterie haute capacité (1), et peut être utilisé de manière sélective :
i) pour fournir une tension de sortie pour charger l'unité de batterie d'alimentation principale (2) à partir de l'unité portable de batterie haute capacité (1) ; et
ii) pour convertir une puissance de sortie de l'unité portable de batterie haute capacité (1) à une puissance nécessaire pour faire fonctionner le contrôleur de moteur (5) ;
et **caractérisé en ce que**
l'unité portable de batterie haute capacité (1) peut être détachée du système (100) et peut être indépendamment chargée à partir d'un chargeur externe (4).

2. Système de gestion pour unité de batterie (100) selon la revendication 1, dans lequel les premiers moyens de gestion de batterie (21) sont en outre configurés pour fournir au convertisseur CC (3) et au contrôleur de moteur (5) couplé à celui-ci les informations de batterie nécessaires au fonctionnement.

3. Système de gestion pour unité de batterie (100) selon la revendication 1 ou 2, dans lequel l'unité portable de batterie haute capacité (1) est une batterie Li-ion haute capacité, une batterie Li-polymère ou une pile à combustible de type à échange.

4. Système de gestion pour unité de batterie (100) selon l'une quelconque des revendications précédentes, comprenant une pluralité d'unités portables de batterie haute capacité interchangeables (1).

5. Système de gestion pour unité de batterie (100) selon l'une quelconque des revendications précédentes, dans lequel les seconds moyens de gestion de batterie intégrés (11) sont configurés pour fournir une indication de faible capacité ou une coupure pour faible capacité entre l'unité portable de batterie haute capacité (1) et le convertisseur CC (3).

6. Système de gestion pour unité de batterie (100) selon l'une quelconque des revendications précédentes, dans lequel l'unité portable de batterie haute capacité (1) est rechargeable à partir d'un chargeur de batterie externe (4) lorsqu'il est couplé au convertisseur CC (3), l'unité de batterie d'alimentation principale (2) étant rechargeable via le convertisseur CC (3).

7. Système de gestion pour unité de batterie (100) selon l'une quelconque des revendications précédentes, dans lequel l'unité de batterie d'alimentation principale (2) est une batterie Pb/CaS04, une batterie Ni-MH, une batterie Ni-Zn, une batterie Li-Mn/Li-Co, ou une batterie Li-Polymère.

8. Système de gestion pour unité de batterie (100) selon l'une quelconque des revendications précédentes, dans lequel le convertisseur CC (3) est un chargeur de batterie à limitation de courant maximal configuré pour transmettre une alimentation électrique à un véhicule en mouvement, utilisable pour partager la demande en alimentation du contrôleur de moteur (5) entre l'unité de batterie d'alimentation principale (2) et l'unité portable de batterie haute capacité (1), et le convertisseur CC (3) est également configuré pour recharger l'unité de batterie d'alimentation principale (2) à partir de l'unité portable de batterie haute capacité (1).

9. Système de gestion pour unité de batterie (100) selon la revendication 8, dans lequel, dans le cas où l'énergie requise pour parcourir une distance nécessaire en un seul voyage est au-delà de la capacité de l'unité portable de batterie haute capacité (1), l'unité portable de batterie haute capacité (1) peut être rechargée avec le chargeur de batterie externe (4), ou remplacée par une autre unité portable de batterie haute capacité (1), ou le système de batterie composée complet peut être rechargé avec le chargeur de batterie externe (4) rétablissant ainsi l'alimentation de l'unité de batterie d'alimentation principale (2).

10. Système de gestion pour unité de batterie (100) selon l'une quelconque des revendications précédentes, comprenant en outre un circuit logique pour juger si l'énergie électrique stockée dans les deux unités de batterie (1, 2) est suffisante pour faire fonctionner le contrôleur de moteur (5).

11. Système de gestion pour unité de batterie (100) selon l'une quelconque des revendications précédentes, dans lequel le convertisseur CC (3) comprend des fonctions de contrôle pour vérifier : si une charge résiduelle de l'unité portable de batterie haute capacité (1) est égale à zéro, si l'unité de batterie d'alimentation principale (2) est complètement chargée et si le contrôleur de moteur (5) est en état de fonctionner.

12. Système de gestion pour unité de batterie (100) selon l'une quelconque des revendications précédentes, dans lequel l'unité de batterie d'alimentation principale (2) comprend une pluralité de batteries connectées en série, les batteries étant identiques ou différentes.

13. Système de gestion pour unité de batterie (100) selon l'une quelconque des revendications précédentes, comprenant plus d'une unité portable de batterie haute capacité (1).

14. Système de gestion pour unité de batterie (100) selon l'une quelconque des revendications précédentes, dans lequel l'unité de batterie d'alimentation principale (2) est configurée pour être entraînée sur un véhicule à moteur ; et
l'unité portable de batterie haute capacité (1) est configurée pour pouvoir être détachée du véhicule à moteur.

15. Véhicule à moteur comprenant un système de gestion pour unité de batterie composée (100) selon la revendication 14, dans lequel
l'unité de batterie d'alimentation principale (2) est entraînée sur le véhicule à moteur ; et
l'unité portable pour batterie haute capacité (1) peut être détachée du véhicule à moteur.
